# EUROPEAN PATENT APPLICATION

(11) **EP 4 733 947 A1**
(43) Date of publication of application: **29.04.2026**
(21) Application number: 25211344.4
(22) Date of filing: 27.10.2025
(51) Int. Cl.: G06F 12/08, G06F 12/122, G06F 12/0882, G06F 11/34, G06F 12/02, G06F 12/109, G06F 12/1009, G06F 12/0862

(54) **DEVICE AND METHOD WITH HOTNESS TRACKING**

(30) Priority: 28.10.2024 KR 20240149071
(71) Applicant: Samsung Electronics Co., Ltd., Suwon-si, Gyeonggi-do 16677 (KR)
(72) Inventor: Shin, Youngsam, 16678 Suwon-si, Gyeonggi-do (KR); Oh, Deok Jae, 16678 Suwon-si, Gyeonggi-do (KR)
(74) Representative: Grünecker Patent- und Rechtsanwälte PartG mbB

(57) **Abstract**

A memory device for providing hotness tracking and a method operating the memory device are provided. The device includes a memory array including a memory space, a controller configured to set focus address ranges in the memory space based on a focus request from a host for hotness tracking, and one or more counters including a counter configured to count memory accesses to a corresponding focus address range among the one or more focus address ranges to determine a counted value, and provide the counted value to the host.

## Description

### BACKGROUND

### 1. Field

The following description relates to a device and method with hotness tracking.

### 2. Description of Related Art

Tiered memory management technologies may be used to optimize memory performance of systems by utilizing memory devices with various performance characteristics. For example, such tiered memory systems may include Compute Express Link (CXL)-based memory devices. A typical used technique within this domain is hotness tracking, where a memory access pattern for the tiered memory may be analyzed by a host, and hot pages and cold pages may be distinguished. According to the hotness tracking technology, frequently accessed pages may be disposed in a fast memory layer, which may improve system performance.

### SUMMARY

The invention is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a memory device includes a memory array comprising a memory space; a controller configured to set focus address ranges in the memory space based on a focus request from a host for hotness tracking; and one or more counters, comprising a counter configured to count memory accesses to a corresponding focus address range among the focus address ranges to generate a counted value, and provide the counted value to the host.

The controller may be further configured to receive a memory address associated with a memory access, and increase the counted value generated by the counter, in response to the memory address belonging to the corresponding focus address range.

The controller may include a reconfigurable address filter, and is further configured to set a filtering range of the reconfigurable address filter based on the focus address ranges, and the reconfigurable address filter is configured to identify the corresponding focus address range to which the memory address belongs.

The counter may be configured to provide the counted value to the host based on a feedback request from the host.

The feedback request may include identification of the corresponding focus address range among the focus address ranges.

The focus request may include the focus address ranges.

The focus address ranges may be determined based on one or more of a hot page candidate and a cold page candidate managed by the host.

The one or more of the hot page candidate and the cold page candidate may be determined as a hot page and a cold page, respectively, based on counted values associated with the focus address ranges.

The counter may be configured to, in response to the counted value satisfying one or more feedback conditions, provide the counted value to the host.

The one or more feedback conditions may be determined based on one or more of a hot feedback threshold for a hot page and a cold feedback threshold for a cold page.

The controller may be further configured to set sub-address ranges within the corresponding focus address range by reducing a size of the corresponding focus address range, and provide counted values of the sub-address ranges to the host.

The size of the corresponding focus address range and a size of the sub-address ranges may be set based on a memory space size indicated by a page table entry for each of page tables at a plurality of levels.

The controller may be configured to, in response to a cold page being stored in the memory space due to demotion, set a cold focus address range corresponding to the cold page to evaluate suitability of the demotion, and to provide a counted value associated with memory accesses to the cold focus address range to the host.

The focus address ranges may be set based on a memory policy of an application using the focus address ranges.

The memory device may be a second-tier memory device distinct from a first-tier memory device of the host.

In one general aspect, an electronic device includes a host; a first-tier memory device comprising a first memory space; and a second-tier memory device comprising a second memory space and having a slower processing speed than the first-tier memory device, wherein the second-tier memory device is configured to: set focus address ranges in the second memory space based on a focus request from the host for hotness tracking; count memory accesses to a corresponding focus address range among the focus address ranges to determine a counted value of a counter; and provide the counted value to the host.

The second-tier memory device may be further configured to receive a memory address associated with a memory access, and increase the counted value of the counter when the memory address falls within the corresponding focus address range.

The second-tier memory device may include a reconfigurable address filter, and is further configured to set a filtering range of the reconfigurable address filter based on the focus address ranges, and the reconfigurable address filter is configured to identify the corresponding focus address range to which the memory address belongs.

The second-tier memory device may be further configured to provide the counted value to the host in response to a feedback request from the host that includes the corresponding focus address range.

In one general aspect, a method of operating a memory device includes setting one or more focus address ranges in a memory space based on a focus request from a host for hotness tracking; counting memory accesses to a corresponding focus address range using a counter to determine a counted value of a counter; and providing the counted value to the host.

Other features and aspects will be apparent from the following detailed description, the drawings, and the claims.

### BRIEF DESCRIPTION OF THE DRAWINGS

FIG. 1 illustrates an example memory management operation using hotness tracking of an electronic device having a tiered memory system according to one or more embodiments.
FIG. 2 illustrates an example configuration of a memory device according to one or more embodiments.
FIG. 3 illustrates an example memory management operation of a host and a controller according to one or more embodiments.
FIG. 4 illustrates an example demotion verification according to one or more embodiments.
FIG. 5 illustrates an example feedback operation of a memory device using feedback conditions according to one or more embodiments.
FIG. 6 illustrates an example process of updating a memory address range according to one or more embodiments.
FIG. 7 illustrates an example memory management operation based on a memory policy of an application according to one or more embodiments.
FIG. 8 illustrates an example method of operating a memory device according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Throughout the specification, when a component, element, or layer is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

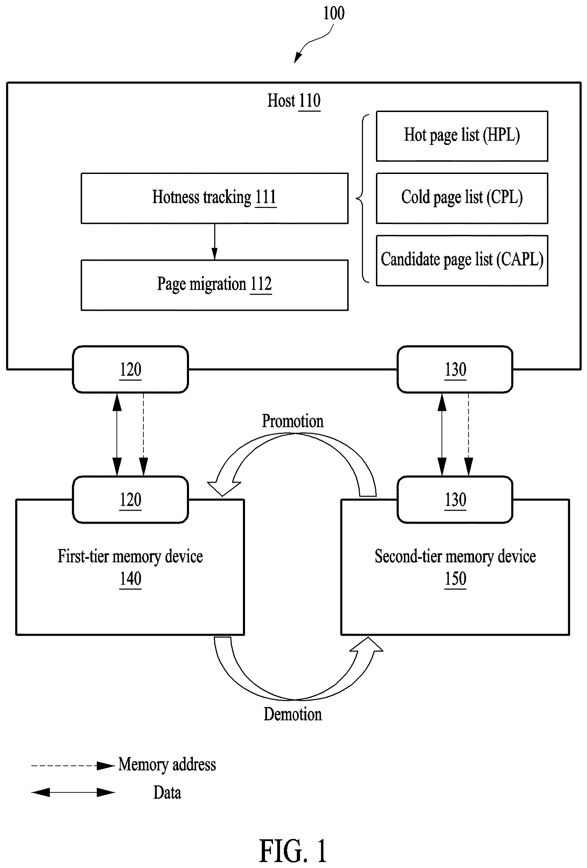

FIG. 1 illustrates an example memory management operation using hotness tracking in an electronic device having a tiered memory system according to one or more embodiments. Referring to FIG. 1, an electronic device 100 may include a host 110, a first-tier memory device 140, and a second-tier memory device 150. The electronic device 100 may further include additional components not shown in FIG. 1, such as storage (e.g., disk), an input/output (I/O) device, a communication interface, and/or an auxiliary processor (e.g., a graphics processing unit (GPU), a neural processing unit (NPU), and/or an accelerator). For example, the electronic device 100 may be a computing device, such as a desktop or a server, but is not limited thereto. The host 110 may be a processor (e.g., a central processing unit (CPU)). When the electronic device 100 includes the auxiliary processor, the host 110 may serve as a main processor.

The first-tier memory device 140 may provide faster access times than the second-tier memory device 150. The second-tier memory device 150 may provide a larger capacity than the first-tier memory device 140. For example, the first-tier memory device 140 may be a system memory, such as a dynamic random-access memory (DRAM), and the second-tier memory device 150 may be an additional memory, an auxiliary memory, and/or a remote memory, such as one based on Compute Express Link (CXL) technology. The first-tier memory device 140 may be referred to as a fast memory, and the second-tier memory device 150 may be referred to as a slow memory.

The host 110 and the first-tier memory device 140 may be connected via a first interface 120. For example, the first-tier memory device 140 may be a dual inline memory module (DIMM), and the first interface 120 may be an interface for the DIMM. The host 110 and the second-tier memory device 150 may be connected via a second interface 130. For example, the second-tier memory device 150 may be a CXL-based memory, and the second interface 130 may be a CXL interface. The first interface 120 may be different from the second interface 130. For example, the first interface 120 and the second interface 130 may use different standards and connection protocols.

The host 110 may access the first-tier and second-tier memory devices 140 and 50 via the corresponding first and second interfaces 120 and 130. The host 110 may perform memory access using a memory address. Memory access operations may include storing data to or loading data from a memory space associated with a specific memory address.

The host 110 may perform hotness tracking 111 to profile a memory access pattern of a task. Based on the hotness tracking 111, frequently accessed data may be disposed in the first-tier memory device 140, and infrequently accessed data may be disposed in the second-tier memory device 150. By allocating frequently accessed data to the first-tier memory device 140 (i.e., faster memory), the device and method of one or more embodiments may improve overall system performance. Although the first-tier memory device 140 may be limited in size due to cost or other constraints, the hotness tracking 111 of one or more embodiments may enable the first-tier memory device 140 to be efficiently used, thereby reducing the total system costs.

Hotness tracking may generate profiling data including one or more of a hot page list (HPL), a cold page list (CPL), and a candidate page list (CAPL). The HPL may include pages, on which many memory accesses are performed, as hot pages. The CPL may include pages, on which few memory accesses are performed, as cold pages. The CAPL may include hot page candidates and cold page candidates.

Directly tracking all memory accesses to pages by the host 110 may cause performance overhead of the host 110. To reduce/mitigate the performance overhead, increasing a sampling period may decrease immediacy, while increasing a sampling range may decrease accuracy. The second-tier memory device 150 may include a counting logic that counts memory accesses. For example, the counting logic may include hardware counters. The host 110 of one or more embodiments may use the counting logic of the second-tier memory device 150 to improve the immediacy and accuracy while reducing the performance overhead during the hotness tracking 111.

The host 110 may initially perform rough memory profiling to determine hot page candidates and cold page candidates for inclusion in the CAPL. For example, the host 110 may perform the memory profiling using a performance counter, a non-uniform memory access (NUMA)-based hinting page fault, an A-bit scan of a page table entry (PTE), and/or similar techniques.

The second-tier memory device 150 may count actual memory accesses for hot page candidates and cold page candidates using the counting logic, generate counting results (e.g., counted values), and provide the counted values to the host 110. Based on the generated counted values, the host 110 may determine a hot page of the HPL and a cold page of the CPL.

For example, the host 110 may verify hot page candidates and cold page candidates using the counting results, and determine hot pages and cold pages based on verification results. For example, the host 110 may determine a candidate as a hot page in response to a candidate value exceeding a hot threshold, and determine a candidate as a cold page in response to a candidate value being less than a cold threshold. For example, the host 110 may determine hot pages and cold pages by combining memory profiling results of the host 110 and memory profiling results (e.g., the counting results) of the second-tier memory device 150.

The host 110 may perform page migration 112 based on the profiling results obtained from the hotness tracking 111. The host 110 may migrate a hot page positioned in the second-tier memory device 150 to the first-tier memory device 140, and migrate a cold page positioned in the first-tier memory device 140 to the second-tier memory device 150. Migrating the hot page from the second-tier memory device 150 to the first-tier memory device 140 may be referred to as promotion, and migrating the cold page from the first-tier memory device 140 to the second-tier memory device 150 may be referred to as demotion. Thus, this migrating movement may be referred to as promotion and demotion, respectively.

The host 110 may perform the hotness tracking 111 and the page migration 112 in coordination with system software. Memory pages of various sizes, such as 4 kilobytes (KB) or 2 megabytes (MB), may be used, but are not limited thereto. 4 KB may be a regular page size, and 2 MB may be a huge page size. Other memory chunk units beyond the page sizes may also be used.

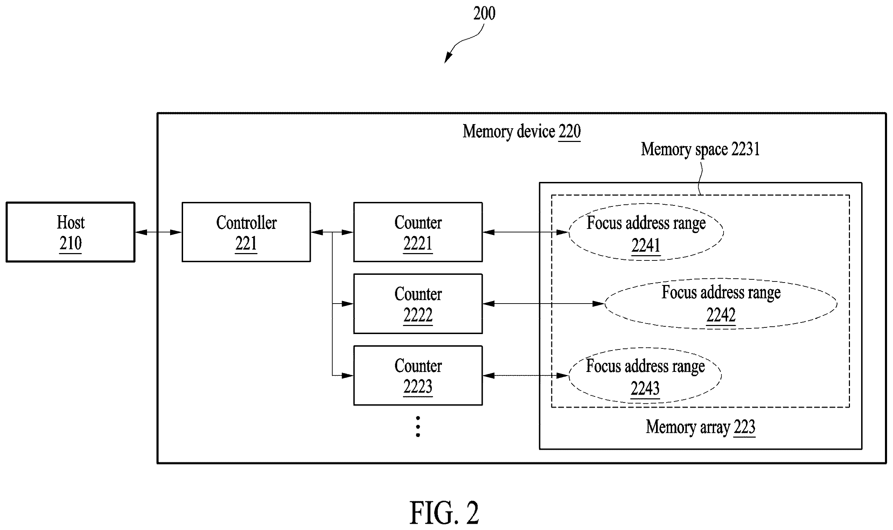

FIG. 2 illustrates an example configuration of a memory device according to one or more embodiments. Referring to FIG. 2, an electronic device 200 may include a host 210 and a memory device 220. The memory device 220 may serve as a second-tier memory device, distinct from a first-tier memory device of the host 210. The memory device 220 may include a controller 221 (e.g., one or more processors), counters 2221, 2222, and 2223 (e.g., one or more processors), and a memory array 223. The memory array 223 may include a memory space 2231. In a non-limiting example, the controller 221 and the counters 2221, 2222, and 2223 may be included in a processor (e.g., one or more processors) included in the memory device 220, or, another non-limiting example, each of the controller 221 and the counters 2221, 2222, and 2223 may be a respective processor (e.g., one or more processors) included in the memory device 220.

The host 210 may perform the hotness tracking by targeting focus address ranges 2241, 2242, and 2243, each corresponding to a portion of the memory space 2231. The host 210 may perform rough memory profiling to determine one or more of hot page candidates and cold page candidates, and determine the focus address ranges 2241, 2242, and 2243 based on the one or more of the hot page candidates and the cold page candidates. The focus address ranges 2241, 2242, and 2243 may each correspond to a memory page. The host 210 may transmit a focus request for the focus address ranges 2241, 2242, and 2243 to the controller 221. For example, the focus request may include focus address ranges 2241, 2242, and 2243. The host 210 may set the focus address ranges 2241, 2242, and 2243 by calling an application program interface (API) provided by a device driver of the memory device 220.

In response to the focus request from the host 210, the controller 221 may set the focus address ranges 2241, 2242, and 2243 in the memory space 2231 for the hotness tracking. Each of the counters 2221, 2222, and 2223 may correspond to one of the focus address ranges 2241, 2242, and 2243. The corresponding focus address range of the counter 2221 may be the focus address range 2241, the corresponding focus address range of the counter 2222 may be the focus address range 2242, and the corresponding focus address range of the counter 2223 may be the focus address range 2243.

The counters 2221, 2222, and 2223 may count memory accesses to their respective focus address ranges 2241, 2242, and 2243 and determine corresponding counted values, which are then provided to the host 210. For example, the counter 2221 may count/track memory accesses to the focus address range 2241, generate a counted value representing the memory accesses (i.e., access frequency) to the focus address range 2241, and provide the counted value to the host 210. Since the focus address ranges 2241, 2242, and 2243 represent only a portion of the entire memory space 2231, the device and method of one or more embodiments may advantageously perform tracking with a limited (e.g., less than a total) number of counters. Further, the device and method of one or more embodiments may achieve efficient use of the counters by adjusting the granularity of the address ranges.

The controller 221 may receive a memory address associated with the memory access, and increase the counted value of the corresponding counter (e.g., the counter 2221) when the memory address of the memory access belongs to the corresponding focus address range (e.g., the focus address range 2241). For example, the controller 221 may include a reconfigurable address filter. The controller 221 may set a filtering range of the reconfigurable address filter based on the focus address ranges 2241, 2242, and 2243 provided in the focus request. When receiving a corresponding memory address, the reconfigurable address filter may filter the corresponding memory address based on the focus address ranges 2241, 2242, and 2243 to determine a focus address range (e.g., the focus address range 2241), to which the corresponding memory address belongs. The controller 221 may control (e.g., trigger) an associated counter (e.g., the counter 2221) to update (e.g., increase) a counted value of the associated counter having the focus address range (e.g., the focus address range 2241) corresponding to the filtering results.

The counters 2221, 2222, and 2223 may provide counted values to the host 210 in response to a feedback request from the host 210. The feedback request may be transmitted to the counters 2221, 2222, and 2223 via the controller 221 or transmitted directly to the counters 2221, 2222, and 2223 without the controller 221. Similarly, the counted values may be transmitted to the host 210 via the controller 221 or directly transmitted to the host 210 without the controller 221.

The feedback request may include identification of the corresponding focus address range (e.g., the focus address range 2241) of the counter (e.g., the counter 2221) to be verified. The host 210 may transmit the feedback request to the controller 221, identifying which focus address range (e.g., the focus address range 2241) to be verified among the focus address ranges 2241, 2242, and 2243. The feedback request may be generated based on a hotness sampling period. By utilizing the counting logic (e.g., counters 2221-2223) of the memory device 220, the performance overhead for memory profiling can be reduced, and the host 210 can transmit the feedback request at a desired hotness sampling period.

When the counted values satisfy one or more predetermined feedback conditions, the counters 2221, 2222, and 2223 may automatically provide the counted values to the host 210, even without a feedback request from the host 210. The feedback conditions may be determined based on one or more thresholds for hot and cold page candidates. When the feedback conditions are satisfied (e.g., one or more thresholds are met or exceeded), an interrupt may be triggered, and when the counted value of the counter (e.g., the counter 2221) of the counters 2221, 2222, and 2223 satisfies the feedback conditions, an interrupt may be generated and the counter (e.g., the counter 2221) may feedback the counted value to the host 210.

The host 210 may perform hotness tracking based on the feedback received from the memory device 220. For example, the host 210 may determine whether one or more of the hot page candidates and the cold page candidates should be finalized as one or more of a hot page and a cold page based on the counted values of the focus address ranges 2241, 2242, and 2243.

The host 210 may track actual memory accesses to the focus address ranges 2241, 2242, and 2243 using the counting logic of the memory device 220. The overhead burden on the host 210 due to the hotness tracking may be reduced through cooperation between the host 210 and the memory device 220. The host 210 may set a sampling period that may ensure the immediacy of memory profiling. Accuracy of memory profiling may be improved as the actual memory accesses to the focus address ranges 2241, 2242, and 2243 are tracked. As the hotness tracking progresses, the focus address ranges 2241, 2242, and 2243 may be updated to narrower segments, further improving tracking accuracy. The updating operation of the focus address ranges 2241, 2242, and 2243 will be described in detail below.

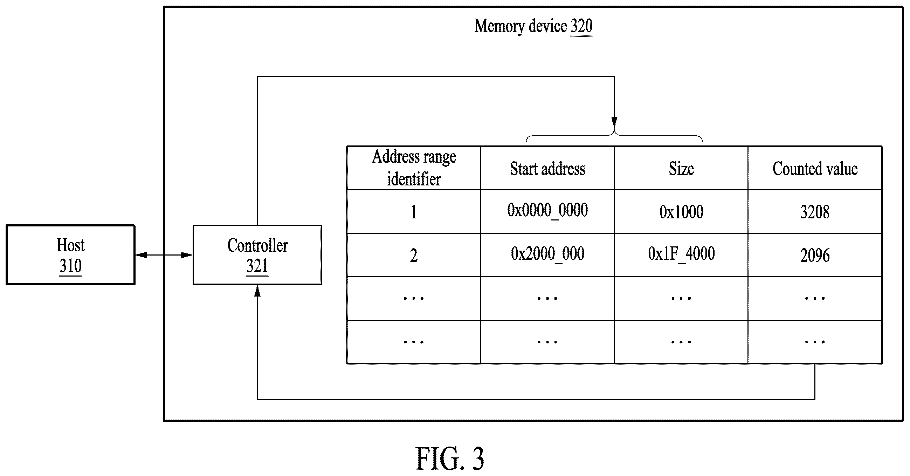

FIG. 3 illustrates an example memory management operation between a host and a controller according to one or more embodiments. Referring to FIG. 3, a controller 321 of a memory device 320 may set focus address ranges based on a focus request from a host 310. The focus address ranges may correspond to device physical addresses (DPAs). A host physical address (HPA), representing a physical address in a host system, may be mapped to a corresponding DPA. When a virtual memory is used, an application may operate using a virtual address (VA), which may be set to a DPA that is recognizable by the memory device 320 through address translation mechanisms.

The memory device 320 may serve as a second-tier memory device. The focus request may include one or more focus address ranges. For example, the focus address ranges may be specified using a start address and a size, but are not limited thereto. The focus address ranges may be identified through address range identifiers. In the example of FIG. 3, a first focus address range may have a start address of "0x0000_0000" and a size of "0x1000", while a second focus address range may have a start address "0x2000_000" and a size of "0x1 F_4000".

The memory access to each focus address range may be counted/tracked by a corresponding counter, to which a corresponding focus address range is allocated. In the example of FIG. 3, "3208" times of memory accesses may be counted by a first counter, to which the first focus address range is allocated, and "2096" times of memory accesses may be counted by a second counter, to which the second focus address range is allocated. The counted values may be provided to the host 310 in response to a feedback request and/or satisfaction of a feedback condition predetermined by the host 310.

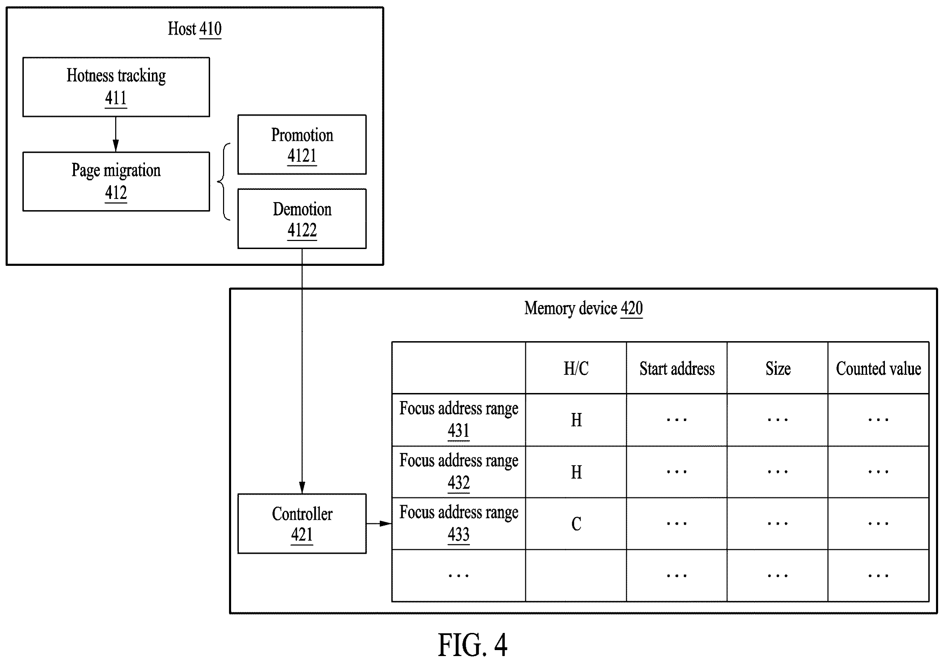

FIG. 4 illustrates an example demotion verification according to one or more embodiments. Referring to FIG. 4, a host 410 may perform hotness tracking 411 and page migration 412. The page migration 412 may include promotion 4121 that migrates a hot page from a second-tier memory device to a first-tier memory device, and demotion 4122 that migrates a cold page from the first-tier memory device to the second-tier memory device. The host 410 may sequentially perform the page migration 412 on hot pages identified in an HPL and cold pages identified in a CPL.

When the hotness tracking 411 is not operating properly, false positive detection of hot pages or false negative detection of cold pages may occur. The false positive detection, which misidentifies a non-hot page as a hot page, may significantly degrade system performance. When the false positive detection occurs, the promotion 4121 of a corresponding page may be performed unnecessarily, or a memory space of the first-tier memory device may be wasted because the corresponding page is stored in the first-tier memory device. The false negative detection may refer to that a cold page is mistaken for not being a cold page. When the false negative detection occurs, the corresponding page may be stored in the first-tier memory device, resulting in wasting memory space in the first-tier memory device.

When the demotion 4122 from the first-tier memory device is not performed properly, the first-tier memory device may lack sufficient space for the promotion 4121. When the hotness tracking 411 fails to respond quickly for memory access patterns of workloads of an application that change from moment to moment, the demotion 4122 may not be performed properly. For example, before the promotion 4121 is performed, when a cold page is detected in the first-tier memory device, the demotion 4122 may not be performed in a timely manner in a case where repeated sampling is performed or there is a mismatch in a detection threshold or cycle for detection of a cold page under a migration policy.

When a memory pressure occurs in the first-tier memory device, the host 410 may proactively perform the demotion 4122 and verify suitability of the demotion 4122 in response thereof, thereby preventing a delay of the demotion 4122. When the demotion 4122 is evaluated as unsuitable, the host 410 may reverse the action by performing the promotion 4121 for the corresponding page. Thus, the performance overhead of the host 410 may be reduced by verifying the suitability of the demotion 4122 using the second-tier memory device. As the demotion 4122 is proactively performed, a space for the promotion 4121 may be secured in the first-tier memory device in a timely manner.

Referring to FIG. 4, the cold page demoted from the first-tier memory device may be stored in the memory space of a memory device 420 according to the demotion 4122. The memory device 420 may be the second-tier memory device. Upon storing the cold page, a controller 421 may set a cold focus address range corresponding to the cold page, and count/track memory accesses to the cold focus address range. This tracking is used to check/verify the suitability of the demotion 4122. The focus address range for the cold page where the demotion 4122 is performed may be referred to as the cold focus address range. The controller 421 may report a counted value for the memory accesses to the cold focus address range to the host 410.

The host 410 may evaluate the suitability of the demotion 4122 based on the counted value. For example, when the counted value is below a verification threshold, the demotion 4122 may be evaluated as suitable. When the demotion 4122 is suitable, no further operation may be performed on the cold page. When the counted value exceeds the verification threshold, the demotion 4122 may be evaluated as unsuitable. In such a case, the host 410 may modify the memory policy that caused the demotion 4122, for example, by tightening the conditions for performing the demotion 4122. The verification threshold may have a level at which warm pages may be classified. For example, the verification threshold may be set below a hot threshold. When the counted value exceeds the verification threshold but below the hot threshold, the host 410 may modify the memory policy. When the counted value exceeds the hot threshold, the host 410 may determine/reclassify the cold page as a hot page.

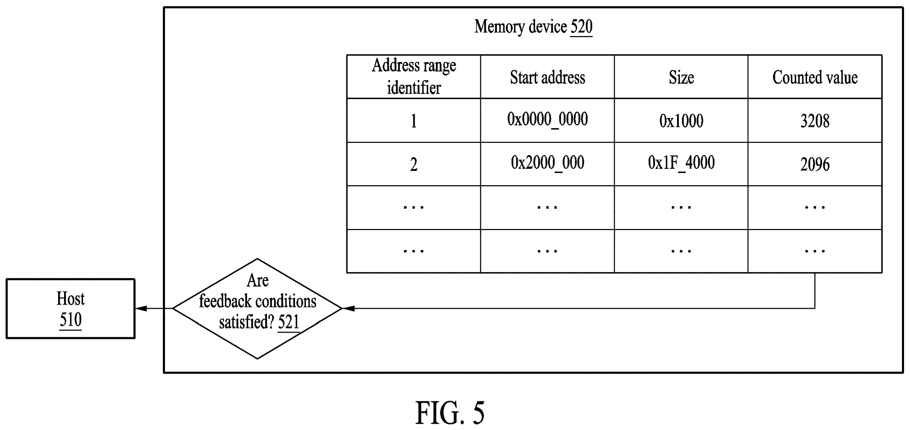

FIG. 5 illustrates an example feedback operation performed by a memory device using feedback conditions according to one or more embodiments. Referring to FIG. 5, a memory device 520 may be a second-tier memory device, and may be configured to check whether the feedback conditions are satisfied in operation 521. When the feedback conditions are satisfied, the memory device 520 may provide a counted value to a host 510. The feedback conditions may be set individually for each focus address range, set for each group of focus address ranges, or set collectively for all focus address ranges.

The feedback conditions may be determined based on one or more of a hot feedback threshold for hot pages and a cold feedback threshold for a cold page. For example, the feedback conditions may include one or more of the counted value exceeding the hot feedback threshold at a predetermined sampling rate and the counted value exceeding the cold feedback threshold at a predetermined sampling rate. The memory device 520 may include a comparator that compares a counted value with a feedback threshold.

Focus address ranges may be set in the memory device 520 according to the focus request from the host 510. These focus address ranges may include a hot focus address range for the hot page feedback and a cold focus address range for the cold page feedback. The focus request from the host 510 may include focus address ranges and respective types of the focus address ranges (e.g., a hot focus address range or a cold focus address range).

The host 510 may identify/determine a page as a hot page when an access count value of the page exceeds a hot threshold. When the hot feedback threshold is equal to the hot threshold, the host 510 may determine/classify a page from the hot focus address range as hot based on the feedback of the memory device 520. The host 510 may issue a focus request for a cold focus address range to the memory device 520 for demotion verification. When the cold feedback threshold is equal to the verification threshold, the host 510 may modify the memory policy that caused/triggered the demotion based on the feedback of the memory device 520. When the cold feedback threshold is equal to the hot threshold, the host 510 may identify/determine the hot page from the cold focus address range based on the feedback of the memory device 520.

The host 510 may perform the hotness tracking based on the feedback of the memory device 520. When the feedback conditions are satisfied, the memory device 520 may provide the counted value to the host 510 without the feedback request from the host 510. If there is no voluntary feedback from the memory device 520, the host 510 may repeatedly request for feedback to the memory device 520 at a predetermined sampling rate. The voluntary feedback of the memory device 520 may reduce the computational burden on the host 510.

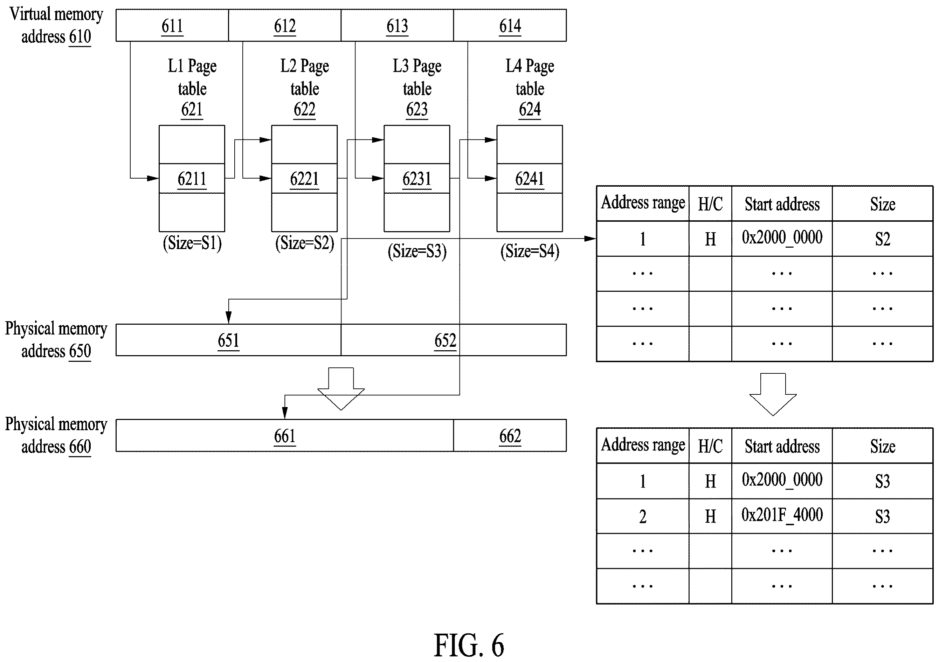

FIG. 6 illustrates an example process of updating a memory address range according to one or more embodiments. Referring to FIG. 6, a virtual memory address 610 may include indices 611 through 614 corresponding to page table entries (PTEs) 6211 through 6241 at four levels of page tables 621 through 624 (L1 through L4). Memory spaces indicated by the PTEs 6211 to 6241 may have different sizes. A PTE 6211 may indicate a memory space of a size S1, a PTE 6221 may indicate a memory space of a size S2, a PTE 6231 may indicate a memory space of a size S3, and a PTE 6241 may indicate a memory space of a size S4. For example, S1 may be 512 gigabytes (GB), S2 may be 1 GB, S3 may be 2 MB, and S4 may be 4 KB, but examples are not limited thereto. 4 KB may represent a regular page size, and 2 MB or more may represent a huge page size.

A second-tier memory device (e.g., via its controller) may set sub-address ranges of the corresponding focus address range by reducing a size of the corresponding focus address range of a corresponding counter. The second-tier memory device may allocate these sub-address ranges to one or more counters including the corresponding counter. The second-tier memory device may count counted values (e.g., memory accesses) of the sub-address ranges using the corresponding counters, and provide the counted values to the host. The second-tier memory device may perform these address range updates either on request from the host or on its own.

The sizes of the focus address ranges (e.g., the corresponding focus address ranges) and the sub-address ranges may be set based on the memory space size indicated by the page PTE for each of the page tables 621 through 624 at a plurality of levels. In the example of FIG. 6, the size of a focus address range of the counter may be set to S2 (e.g., 1 GB). For example, the focus address range may be a first focus address range having a start address of "0x2000_0000" and a size of S2.

For example, a page table 622 at a second level may be determined based on the PTE 6211 of the page table 621 at a first level indicated by the index 611 of the virtual memory address 610, and an index 651 of a physical memory address 650 may be determined based on a PTE 6221 of the page table 622 at the second level indicated by the index 612 of the virtual memory address 610. A start address (e.g., "0x2000_0000") of the first focus address range may be determined based on the index 651 and an offset 652 of the physical memory address 650. The offset 652 may be determined based on an offset (not shown) of the virtual memory address 610.

When the focus address range corresponds to a hot page, the focus address range may be divided into smaller sub-address ranges to more precisely identify the range of the hot page. In this case, the page table 622 at the second level may be determined based on the PTE 6211 of the page table 621 at the first level indicated by the index 611 of the virtual memory address 610, a page table 623 at a third level may be determined based on the PTE 6221 of the page table 623 at the second level indicated by the index 612 of the virtual memory address 610, and an index 661 of a physical memory address 660 may be determined based on the PTE 6231 of the page table 623 at the third level indicated by the index 613 of the virtual memory address 610. A start address (e.g., "0x2000_0000") of a sub-address range may be determined based on the index 661 and an offset 662 of the physical memory address 660. The offset 652 may be determined based on an offset (not shown) of the virtual memory address 610.

In the example of FIG. 6, the size of a sub-address range may be S3 (e.g. 2 MB). For example, the first sub-address range may start at "0x2000_0000" with a size of S3, and the second sub-address range may start at "0x201F_4000" with a size ofS3. Based on the counted values of the sub-address ranges, a sub-address range corresponding to the hot page may be searched and identified from the sub-address ranges. If further precision is needed, the identified sub-address range may be further narrowed down to an even smaller sub-address range of a next stage. For example, the size of the sub-address range of the next stage may be S4 (e.g. 4 KB).

By iteratively narrowing the address range, the device and method of one or more embodiments may gradually reduce the size of the identified hot pages, thereby improving memory efficiency/utilization. As the sizes of the address ranges of various stages are set based on the size of the memory space indicated by the PTE at each page table level, the device and method of one or more embodiments may achieve effective response to the promotion and the demotion in page units. Although FIG. 6 shows an example for a hot page (type H), a cold page search may be performed by a similar narrowing process.

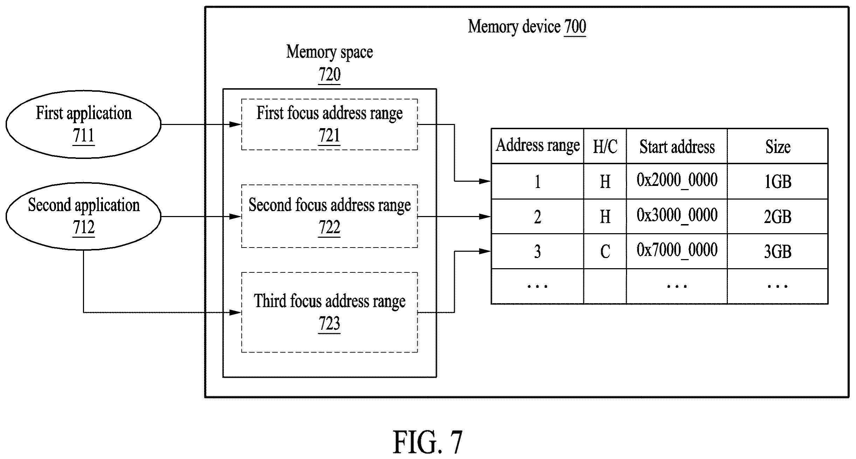

FIG. 7 illustrates an example memory management operation based on a memory policy of an application according to one or more embodiments. Referring to FIG. 7, first to third focus address ranges 721 to 723 may be set in a memory space 720 of a memory device 700, which may be a second-tier memory device.

The first to third focus address ranges 721 to 723 may be set based on memory policies of first and second applications 711 and 712 that use the first to third focus address ranges 721 to 723. For example, Such memory policies may include memory size requirements, memory usage characteristics, and related criteria. The host may obtain allocation information/data from a memory allocator to determine the memory policies of the first and second applications 711 and 712, and perform the hotness tracking based on the memory policies of the first and second applications 711 and 712.

For example, the second application 712 may store frequently accessed data in the second focus address range 722 and infrequently accessed data in the third focus address range 723. In this case, the memory device 700 may set the sizes of the second and third focus address ranges 722 and 723 based on the memory policy of the second application 712, classify the second focus address range 722 as a hot focus address range, and classify the third focus address range 723 as a cold focus address range.

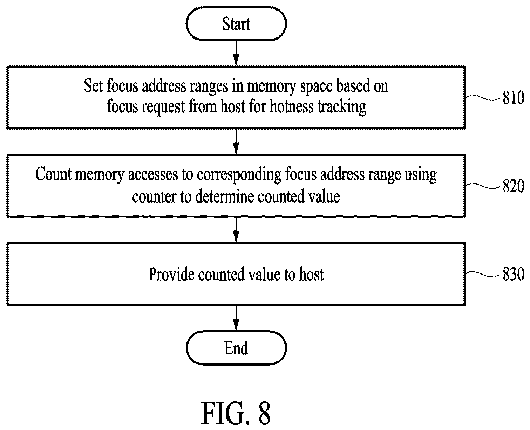

FIG. 8 illustrates an example method of operating a memory device according to one or more embodiments. Referring to FIG. 8, in operation 810, a memory device may set focus address ranges in a memory space based on a focus request generated by a host for hotness tracking. The memory device may be a second-tier memory device. **In** operation 820, the memory device may count memory accesses to a corresponding focus address range of a counter among the focus address ranges to determine a counted value of the counter. In operation 830, the memory device may provide the counted value to the host.

The memory device may receive a memory address of the memory access, and increase the counted value of the counter, when the received memory address belongs to the corresponding focus address range. The memory device may include a reconfigurable address filter, and may set a filtering range of the reconfigurable address filter based on the focus address ranges. When the memory address of the memory access is input, the reconfigurable address filter may filter the memory address based on the focus address ranges to identify the corresponding focus address range, to which the memory address belongs, to trigger the corresponding counter.

The memory device may provide the counted value to the host in response to a feedback request from the host. The feedback request may include identification of the corresponding focus address range among the focus address ranges.

The focus request may include the focus address ranges. The focus address ranges may be determined based on one or more of a hot page candidate and a cold page candidate managed by the host. The one or more of the hot page candidate and the cold page candidate may be determined as one or more of a hot page and a cold page based on counted values of memory accesses to the respective focus address ranges.

When the counted value satisfies feedback conditions, the counter may provide the counted value to the host. The feedback conditions may be determined based on one or more of a hot feedback threshold for a hot page and a cold feedback threshold for a cold page.

The memory device may set sub-address ranges of the corresponding focus address range by reducing a size of the corresponding focus address range, and provide counted values of the sub-address ranges to the host. The sizes of the corresponding focus address range and the sub-address ranges may be set based on a size of a memory space indicated by a PTE for each of page tables at a plurality of levels.

When a cold page is demoted to the memory space, the memory device may set a cold focus address range corresponding to the cold page to evaluate suitability of the demotion, and report a counted value for memory accesses to the cold focus address range to the host.

The focus address ranges may be set based on a memory policy of an application using the focus address ranges.

The electronic devices, processors, memories, storage devices, electronic device 100, host 110/210/310/410/510, device 140/150, controller 221/321/421, memory device 220/320/420/520/700, counter 2221/2222/2223, and other apparatuses, devices, models, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. **In** other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. **In** one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. **In** one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. **In** one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the enclosed claims.

## Claims

1. A memory device comprising:
a memory array comprising a memory space;
a controller configured to set focus address ranges in the memory space based on a focus request from a host for hotness tracking; and
one or more counters, comprising a counter configured to count memory accesses to a corresponding focus address range among the focus address ranges to generate a counted value, and provide the counted value to the host.

2. The memory device of claim 1, wherein the controller is further configured to receive a memory address associated with a memory access, and increase the counted value generated by the counter, in response to the memory address belonging to the corresponding focus address range.

3. The memory device of claim 2, wherein
the controller comprises a reconfigurable address filter, and is further configured to set a filtering range of the reconfigurable address filter based on the focus address ranges, and
the reconfigurable address filter is configured to identify the corresponding focus address range to which the memory address belongs.

4. The memory device of one of claims 1 to 3, wherein the counter is configured to provide the counted value to the host based on a feedback request from the host.

5. The memory device of claim 4, wherein the feedback request comprises identification of the corresponding focus address range among the focus address ranges.

6. The memory device of one of claims 1 to 5, wherein the focus request comprises the focus address ranges.

7. The memory device of claim 6, wherein the focus address ranges are determined based on one or more of a hot page candidate and a cold page candidate managed by the host.

8. The memory device of claim 7, wherein the one or more of the hot page candidate and the cold page candidate are determined as a hot page and a cold page, respectively, based on counted values associated with the focus address ranges.

9. The memory device of one of claims 1 to 8, wherein the counter is configured to, in response to the counted value satisfying one or more feedback conditions, provide the counted value to the host.

10. The memory device of claim 9, wherein the one or more feedback conditions are determined based on one or more of a hot feedback threshold for a hot page and a cold feedback threshold for a cold page.

11. The memory device of one of claims 1 to 10, wherein the controller is further configured to set sub-address ranges within the corresponding focus address range by reducing a size of the corresponding focus address range, and provide counted values of the sub-address ranges to the host.

12. The memory device of claim 11, wherein the size of the corresponding focus address range and a size of the sub-address ranges are set based on a memory space size indicated by a page table entry for each of page tables at a plurality of levels.

13. The memory device of one of claims 1 to 12, wherein the controller is configured to, in response to a cold page being stored in the memory space due to demotion, set a cold focus address range corresponding to the cold page to evaluate suitability of the demotion, and to provide a counted value associated with memory accesses to the cold focus address range to the host, or
wherein the focus address ranges are set based on a memory policy of an application using the focus address ranges, or
wherein the memory device is a second-tier memory device distinct from a first-tier memory device of the host.

14. An electronic device comprising:
a host;
a first-tier memory device comprising a first memory space; and
a second-tier memory device comprising a second memory space and having a slower processing speed than the first-tier memory device, the second-tier memory device being a memory device according to one of claims 1 to 13.

15. A method of operating a memory device, the method comprising:
setting one or more focus address ranges in a memory space based on a focus request from a host for hotness tracking;
counting memory accesses to a corresponding focus address range using a counter to determine a counted value of a counter; and
providing the counted value to the host.
